# EUROPEAN PATENT SPECIFICATION

(11) **EP 4 076 952 B1**
(45) Date of publication and mention of the grant of the patent: **06.12.2023**
(21) Application number: 20820173.1
(22) Date of filing: 10.12.2020
(51) Int. Cl.: B32B 27/08, B32B 27/32, C08J 5/18

(54) **MULTILAYER FILMS FOR PACKAGING RUBBER BALES**
MEHRSCHICHTFOLIEN ZUM VERPACKEN VON GUMMIBALLEN
FILMS MULTICOUCHES POUR L'EMBALLAGE DE BALLES EN CAOUTCHOUC

(30) Priority: 16.12.2019 EP 19216695
(43) Date of publication of application: 26.10.2022
(73) Proprietor: SABIC Global Technologies B.V., 4612 PX Bergen op Zoom (NL)
(72) Inventor: OUDDANE, Mohamed, 6160 GA Geleen (NL); HOMOUD-AL, Riyadh, 6160 GA Geleen (NL); KAKKUZHI, Abdulnizar, 6160 GA Geleen (NL)
(74) Representative: Sabic Intellectual Property Group
(86) International application number: PCT/EP2020/085419
(87) International publication number: WO 2021/122262

(56) References cited:
- EP-B1- 2 826 624
- WO-A1-95/09199
- WO-A1-99/14260
- WO-A1-2017/112587
- WO-A1-2018/140308
- WO-A1-2019/027524
- CA-C- 2 110 093
- CA-C- 2 150 820
- CN-A- 101 117 036
- JP-A- H0 687 193
- US-A- 4 399 180
- US-A- 5 998 017
- US-A1- 2001 014 401
- US-A1- 2006 223 942

## Description

### FIELD OF INVENTION

The invention relates to the field of polyethylene based multilayer films which are suitable for wrapping/packaging rubber bales.

### BACKGROUND

Films used for packaging or wrapping rubber bales are widely used in the rubber industry especially for storage and transportation of rubber bales from production facility to the compounding/processing facility. These wrapping films are particularly beneficial in (a) preventing the contamination of rubber bales with impurity, (b) preventing the degradation of the rubber bales due to aerial oxidation and exposure to humidity, (c) preventing the rubber bales from sticking or fusing with each other during transportation and storage, and (d) preventing the cold flow of raw rubber, prior to processing. Subsequently, once the film wrapped rubber bale is transported to a processing facility, the rubber bale may be compounded using a kneader. Typically, during such kneading operation, a rubber bale is fed into a kneader without peeling the wrapping film and subsequently compounded.

The ability to compound the rubber bale without peeling off the wrapping film is of particular advantage to manufacturers, as it improves over all process efficiency and reduces operating expense during rubber processing. However, it has been observed by industry practioners, that in certain instances, when the viscosity of the raw rubber is low, such as in the case of EPDM rubber, or when the amorphous content of the rubber material is entirely different from amorphous content of the film, the wrapping film remained intact as an undispersed foreign matter and is regarded as an undesirable impurity in the final rubber product.

On the other hand, when attempts were made to circumvent this limitation by peeling off the wrapping films, it was found that peeling off the wrapping films was an extremely tedious and time consuming operation, as the wrapping films have a tendency of adhering firmly to the rubber bale or in certain instances adhering to each other by fusion, resulting in reduced process efficiency and increased operational cost. Thus, it is evident that one of the key requirements of a film suitable to be used for packaging or wrapping rubber bale is compatibility of the wrapping/packaging film with the rubber which in turn is influenced by the degree of crystallinity of the film.

Yet another key requirement of a rubber bale wrapping film, is to have a film that has a suitable melting temperature so as to compound the rubber bale without peeling off the wrapping film. In case the film melting temperature is lower than the temperature at which rubber bale is typically packed, the film may deform, develop high shrinkage and stretching and result in partial coverage of the rubber bale surface. On the other hand, if the melting temperature of a wrapping film is extremely high and exceeds the mixing and compounding temperatures, it may result in partial melting of the film along with improper mixing of other rubber processing additives typically contained in the wrapping/packaging film.

In the past polyethylene based packaging films have been used such as branched, high pressure low density polyethylene (LDPE) and polyethylene (LLDPE).However, the melting and softening characteristics of such polyethylene films, limit their use as a packaging material for rubber bale wrapping. For example, the European granted patent EP0742248 B1, describes a film based on ethylene·α-olefin copolymer suitable for lapping rubber. Although the results appear promising, ethylene·α-olefin copolymers in general have low melt strength which adversely affects film integrity and therefore the mechanical property of films, obtained from such polymers, may be further improved upon.

Alternatively, ethylene vinyl acetate (EVA) based films have also been used extensively for wrapping rubber bale and are currently very popular with rubber compounders and such films have been described in various literature as well. For example, the granted US granted patent, 5,120,787 (Drasner) discloses a method of compounding a rubber by using a bag or a liner made from an ethylene/vinyl acetate (EVA) copolymer, where a bag or liner is directly compounded into the mixer and such bag or liner becomes part of the rubber compound. Such ethylene vinyl acetate (EVA) based films are beneficial for wrapping rubber bale as the vinyl acetate units reduce crystallinity (increase amorphousness) and melt/softening temperature of the film and thereby enhances compatibility of the film with the rubber. US2001014401 relates to wrapping films for bale packaging.

However, films having high content of vinyl acetate units tend to increase undesirable film adhesion property with rubber bales and in certain instances the EVA based films have reduced optical property, rendering the films unsuitable for packaging for certain specific application. Further, compared to conventional polyethylene polymers (LDPE, LLDPE), in certain instance EVA based films have a higher crystallinity rendering such films incompatible with rubber during the compounding process. Accordingly, one way of addressing all of the drawbacks and limitations discussed above, is by developing a film having one or more benefits of having a suitable melting temperature that is sufficient for wrapping rubber bale with excellent compatibility for compounding while retaining suitable mechanical and optical properties.

### DESCRIPTION

Accordingly, one of the objectives of the present invention includes providing a film having one or more benefits of having a suitable melting temperature that is sufficient for wrapping rubber bale with excellent compatibility for compounding while retaining suitable mechanical and optical properties.

The objective of the present invention is achieved by providing multilayer films, comprising:
(a) a first skin layer and a second skin layer, wherein each of the first skin layer and the second skin layer independently comprises:
   (i) an ethylene polymer having a density ranging from 918 kg/m³ to 930 kg/m³, preferably ranging from 920 kg/m³ to 925 kg/m³,when determined in accordance with ASTM D1505 at 23°C, wherein the ethylene polymer is present in an amount ranging from 2 wt.% to 30 wt.%, preferably 5 wt.% to 20 wt.%, with regard to the total weight of each of the first skin layer and the second skin layer; and,
   (ii) a first ethylene alpha-olefin copolymer having a density ranging from 880 kg/m³ to 905 kg/m³, preferably ranging from 890 kg/m³ to 903 kg/m³, when determined in accordance with ASTM D792 at 23°C and present in an amount ranging from 70 wt.% to 98 wt.%, preferably ranging from 75 wt.% to 90 wt.%, with regard to the total weight of each of the first skin layer and the second skin layer, and wherein the first ethylene alpha-olefin copolymer comprises 2 wt.% to 25 wt.%, preferably ranging from 10 wt.% to 20 wt.%, of moieties derived from alpha-olefins, with regard to the total weight of the first ethylene alpha-olefin copolymer; and
(b) at least one core layer positioned between the first skin layer and the second skin layer, comprising a second ethylene alpha-olefin copolymer present in an amount ranging from 95 wt.% to 100 wt.%, preferably 100 wt.%, with regard to the total weight of the core layer, and wherein the second ethylene alpha-olefin copolymer has a density ranging from 830 kg/m³ to 875 kg/m³, when determined in accordance with ASTM D792 at 23°C, wherein the second ethylene alpha-olefin copolymer comprises 30 wt.% to 45 wt.%, preferably 32 wt.% to 40 wt.%, of moieties derived from alpha-olefins, with regard to the total weight of the second ethylene alpha-olefin copolymer.

For the purposes of the present invention, the expression "melting temperature" as used throughout this disclosure means the temperature at which the crystallinity phase of the film is disrupted and enables the film to completely incorporate itself into the rubber. The expression "melt processability" as used throughout this disclosure means the ability of a film, used for wrapping/packaging a rubber bale, to blend and disperse with the rubber during the compounding or kneading process.

For all experiments using DSC for determining the film property such as melting temperature of film, crystalline volume fraction Xc, and delta heat of fusion, the general procedural steps that may be followed for the purpose of this invention, is in accordance with the procedure outlined in ASTM D3418-15 and are as follows:
(a) a polymer sample having a mass between 2 mg to 10 mg may be used by first weighing the sample in a balance having accuracy of ± 0.01 mg;
(b) thereafter, the cell of the DSC may be purged using nitrogen gas at a flow rate of 50 ± 5mL/min, and the sample and empty reference pan of same size, shape and material with cramped cover may be placed at their respective positions;
(c) thereafter, the sample may be equilibrate at 23°C for 1 min and subsequently may be heated to a temperature of 200°C, at the rate of 10⁰C/min with the heating curve may be recorded, and particularly at 200°C, the heating may be maintained for 2 minutes; and
(d) the sample, thereafter, may be cooled at the rate of 10°C/ min, with the cooling curve noted, and step (c) may be repeated to record the second heating curve.

In various aspects of the invention, each of the first skin layer and the second skin layer independently comprises a blend of an ethylene polymer and a first ethylene alpha-olefin copolymer. The expression "skin layer" as used throughout this disclosure in the context of the inventive multilayer film, means the outer layer of the inventive multilayer film, which is exposed to the external environment and severity which the inventive film may be subjected to. In some embodiments of the invention, the first skin layer and the second skin layer are together present in an amount ranging from 15 wt.% to 30 wt.%, preferably ranging from 18 wt.% to 25 wt.%, with regard to the total weight of the multilayer film.

In some aspects of the present invention, the first skin layer and the second skin layer have identical composition with regard to the ethylene polymer content and the first ethylene alpha-olefin copolymer content. In some aspects of the present invention, the first skin layer and the second skin layer have different composition with regard to the ethylene polymer content and the first ethylene alpha-olefin copolymer content. In some embodiments of the invention, each of first skin layer and/or the second skin layer comprises additives present in amount ranging from 2 wt.% to 8 wt.%, preferably ranging from 4 wt.% to 7 wt. %, with regard to the total weight of each of the first skin layer and the second skin layer. Non-limiting examples of additives include anti-blocking and slip additive agents.

In some preferred embodiments of the invention, the ethylene polymer is a low density polyethylene (LDPE). In some embodiments of the invention, the ethylene polymer, is present in an amount ranging from 2 wt.% to 6 wt.%, preferably 2.5 wt.% to 4 wt.%, with regard to the total weight of the multilayer film. In preferred embodiments of the invention, the ethylene polymer is present in an amount of 3.3 wt.%, with regard to the total weight of the multilayer film. As the overall content of the ethylene polymer is kept low (not greater than 6 wt.% with regard to the total weight of the multilayer film), some of the drawback of melting temperature and softening point temperature typically associated with ethylene polymer, is mitigated. However, without being bound by any specific theory, it is believed that ethylene polymer imparts critical processing stability (bubble stability) to the multilayer film due to its high melt strength and broad molecular weight distribution (MWD or Polydispersity Index ranging from 2-12) compared to ethylene copolymers (first and second ethylene copolymers), resulting in reduced thickness variation of the multilayer film.

In embodiments of the present invention, the ethylene polymer has a density ranging from 918 kg/m³ to 930 kg/m³, preferably ranging from 920 kg/m³ to 925 kg/m³, when determined in accordance with ASTM D1505 at 23°C. In preferred embodiments of the invention, the density of the ethylene polymer is 923 kg/m³. In some embodiments of the invention, the ethylene polymer has a melt flow rate ranging from 0.1 g/10 min to 0.9 g/10 min, preferably ranging from 0.2 g/10 min to 0.8 g/10 min, when determined at 190°C at 2.16 kg load, in accordance with ASTM D1238.

In various aspects of the invention, the first ethylene alpha-olefin copolymer is a copolymer derived from ethylene and alpha-olefins. In some aspects of the present invention, the first ethylene alpha-olefin copolymer is a polyolefin plastomer (POP). In some embodiments of the invention, the first ethylene alpha-olefin copolymer, is present in an amount ranging from 10 wt.% to 20 wt.%, preferably 12 wt.% to 18 wt.%, with regard to the total weight of the multilayer film. In some embodiments of the invention, the alpha-olefin is a compound having 4-10 carbon atoms, preferably selected from 1-butene, 4-methyl-1-pentene, 1-hexene, and 1-octene, with preference to 1-octene. In preferred embodiments of the invention, the first ethylene alpha-olefin copolymer is a copolymer derived from ethylene and 1-octene. In some embodiments of the invention, the first ethylene alpha-olefin copolymer is a copolymer derived from ethylene and 1-hexene.ln some embodiments of the invention, the first ethylene alpha-olefin copolymer comprises 2 wt.% to 25 wt.%, preferably 10 wt.% to 20 wt.%, of moieties derived from alpha-olefins, with regard to the total weight of the first ethylene alpha-olefin copolymer.

In some embodiments of the invention, the first ethylene alpha-olefin copolymer has a melting temperature ranging from 75°C to 105°C, preferably ranging from 88°C to 99°C, when determined in accordance with a method based on ASTM D3418-15, using Differential Scanning Calorimetry with a first heating and cooling cycle at a temperature ranging from 23°C to 200°C, at a heating and a cooling rate of 10°C/min for a 10 mg film sample, and using a nitrogen purge gas at flow rate of 50 ± 5 mL/min, followed by a second heating cycle identical to the first heating cycle; and/or the first ethylene alpha-olefin copolymer has a melt flow rate ranging from 0.1 g/10 min to 5 g/10 min, preferably ranging from 0.5 g/10 min to 3 g/10 min, more preferably ranging from 0.8 g/10 min to 2 g/10 min, when determined at 190°C at 2.16 kg load in accordance with ASTM D1238. In some preferred embodiments of the invention, the first ethylene alpha-olefin copolymer has a melting temperature of about 98°C.

In aspects of the present invention, the core layer comprises an ethylene copolymer which is compositionally different from the ethylene copolymer of the skin layers. The expression "core layer" as used throughout this disclosure in the context of the inventive multilayer film, means a layer placed between the skin layers, which is not exposed to the external environment and severities. In some embodiments of the invention, the core layer is present in an amount ranging from 70 wt.% to 85 wt.%, preferably ranging from 75 wt.% to 82 wt.%, with regard to the total weight of the multilayer film. In some aspects of the invention, the core layer comprises a second ethylene alpha-olefin copolymer present in an amount ranging from 95 wt.% to 100 wt.%, preferably 100 wt.%, with regard to the total weight of the core layer. In various aspects of the invention, the second ethylene alpha-olefin copolymer comprises 30 wt.% to 45 wt.%, preferably 32 wt.% to 40 wt.%, of moieties derived from alpha-olefins, with regard to the total weight of the second ethylene alpha-olefin copolymer.

In some aspects of the present invention, the second ethylene alpha-olefin copolymer is a polyolefin elastomer (POE). As with the first ethylene alpha-olefin copolymer, for the second ethylene alpha-olefin copolymer the alpha-olefin used for forming the second ethylene copolymer is a compound having 4-10 carbon atoms, preferably selected from 1-butene, 4-methyl-1-pentene, 1-hexene, and 1-octene, with preference to 1-octene. In preferred embodiments of the invention, the second ethylene alpha-olefin copolymer is a copolymer derived from ethylene and 1-octene. In some embodiments of the invention, the second ethylene alpha-olefin copolymer is a copolymer derived from ethylene and 1-hexene.

In some aspects of the invention, the second ethylene alpha-olefin copolymer has a melting temperature ranging from 60°C to 67°C, preferably ranging from 62°C to 65°C, when determined in accordance with a method based on ASTM D3418-15, using Differential Scanning Calorimetry with a first heating and cooling cycle at a temperature ranging from 23°C to 200°C, at a heating and a cooling rate of 10⁰C/min for a 10 mg film sample and using a nitrogen purge gas at flow rate of 50 ± 5 mL/min, followed by a second heating cycle identical to the first heating cycle; and/or the second ethylene alpha-olefin copolymer has a melt flow rate ranging from 0.5 g/10 min to 3 g/10 min, preferably ranging from 0.8 g/10 min to 2 g/10 min, when determined at 190°C at 2.16 kg load in accordance with ASTM D1238. In some embodiments of the invention, the multilayer film comprises additives present in an amount ranging from 0.10 wt.% to 1.50 wt.%, preferably ranging 0.6 wt.% to 1.3 wt.%, with regard to the total weight of the multilayer film. Non-limiting examples of additives include anti-block agents, slip agents, anti-oxidants and the likes thereof.

In some preferred aspects of the invention, the multilayer film comprises:
(a) the ethylene polymer, present in an amount ranging from 2 wt.% to 6 wt.%, with regard to the total weight of the multilayer film;
(b) the first ethylene alpha-olefin copolymer, present in an amount ranging from 10 wt.% to 20 wt.%, with regard to the total weight of the multilayer film;
(c) the second ethylene alpha-olefin copolymer, present in an amount ranging from 70 wt.% to 85 wt.%, with regard to the total weight of the multilayer film; and
(d) optionally, additives present in an amount ranging from 0.10 wt.% to 1.50 wt.%, with regard to the total weight of the multilayer film.

As is evident, a key difference between the first ethylene alpha-olefin copolymer and the second ethylene alpha-olefin copolymer, is that the first ethylene alpha-olefin copolymer has a lower content of moieties derived from alpha-olefins compared to the second ethylene alpha-olefin copolymer, which imparts certain difference in the properties of density and melting temperature for the ethylene copolymers.

Without being bound by any specific theory, the combination of the first ethylene alpha-olefin copolymer and the second alpha-olefin copolymer in the proportion contemplated by the present invention, imparts suitable melting temperature characteristics and crystallinity to the inventive multilayer film and is particularly advantageous for wrapping rubber bales.

In some embodiments of the invention, the multilayer film of the present invention has a melting temperature ranging from 70°C to 90°C, preferably ranging from 72°C to 80°C, when determined in accordance with a method based on ASTM D3418-15, using Differential Scanning Calorimetry with a first heating and cooling cycle at a temperature ranging from 23°C to 200°C, at a heating and a cooling rate of 10°C/min for a 10 mg film sample, and using a nitrogen purge gas at flow rate of 50 ± 5 mL/min, followed by a second heating cycle identical to the first heating cycle. The melting temperature range for the multilayer films of the present invention, is particularly suitable for wrapping/packaging rubber bales, as the melting temperature of the film is higher than the temperature of the rubber bale, when it is being packed at a rubber production facility, but lower than the temperature typically employed for compounding or kneading the rubber bale at a processing facility. As a result the wrapping/packaging film of the present invention can be used directly for compounding the rubber without the need of peeling the films.

Further, in some aspects of the invention, the multilayer film of the present invention demonstrates excellent compatibility with the rubber bale that the multilayer film wraps. This conclusion is evidenced from the value of the crystalline volume fraction (Xc) of the multilayer film, which demonstrates sufficiently low content of crystalline phase or conversely high content of amorphous phase, which renders the inventive multilayer film suitable for rubber bale packaging. In various embodiments of the invention, the crystalline volume fraction (Xc) of the multilayer film of the present invention ranges from 2% to 10%, alternatively from 3 % to 9%, when determined in accordance with a method based on ASTM D3418-15, using Differential Scanning Calorimetry with a first heating and cooling cycle at a temperature ranging from 23⁰C to 200⁰C, at a heating and a cooling rate of 10⁰C/min for a 10 mg film sample and using a nitrogen purge gas at flow rate of 50 ± 5 mL/min, followed by a second heating and cooling cycle identical to the first heating cycle.

As is evidenced from the results of the film obtained from Example 1 and Reference 1, the crystalline volume fraction (Xc) for the inventive film of Example 1 is significantly lower than that of the film of Reference 1 film based on ethylene vinyl acetate (EVA) polymers, higher compatibility of the inventive multilayer films with the amorphous rubber, than that of conventional EVA based films. The comparison with EVA based films are particularly useful as EVA based films are used extensively in the rubber industry for packaging rubber bales. Therefore, the present invention provides improved solution to skilled artisans for packaging rubber bales over existing solutions that are currently available in the market. Therefore, in one aspect of the invention, the present invention is directed to the use of the multilayer film to improve the melt processability of rubber bales packed using the multilayer film of the present invention.

Further, the multilayer film of the present invention, demonstrates excellent optical properties indicated by the haze and clarity properties of the film. In some aspects of the invention, the multilayer film of the present invention has a haze ranging from 2% to 10%, preferably ranging from 3% to 6%, when determined in accordance with ASTM D1003. In some aspects of the invention, the multilayer film has a clarity ranging from 95% to 99.5%, preferably ranging from 97% to 99%, when determined in accordance with ASTM D4635.

In various aspects of the invention, the invention is directed to a multilayer film having a suitable thickness for wrapping/packaging rubber bales. In some embodiments of the invention, the multilayer film has a thickness ranging from 70 micron to 200 micron, preferably ranging from 120 micron to 175 micron. In some embodiments of the invention, the thickness of the first skin layer and the second skin layer together constitutes 10% to 30%, preferably 15% to 24%, of the thickness of the multilayer film of the present invention.

The multilayer film of the present invention may be prepared in general by any of the known methods known in the art. Multilayer films may be prepared for example by a blown film co-extrusion process, for example as disclosed in "Film Extrusion Manual", (TAPPI PRESS, 2005, ISBN 1 -59510-075-X, Editor Butler, pages 413-435). In some aspects of the invention, the various polymer composition may be first melted in separate extruders and subsequently brought together in using a feed block.

The feed block, may for example comprise a series of flow channels, which bring the individual layers together into a uniform stream. From the feed block, the multi-layer material flows through an adapter and out a die. For example, in some aspects of the invention, the multilayer film can be prepared by:
(a) independently blending three different polymer compositions, each suitable for forming the first skin layer, the core layer and the second skin layer, in a V-blender under temperature conditions not exceeding 40°C and for a time period of about 3 minutes to 5 minutes;
(b) introducing the resulting compositions independently, in a feeder of an extruder capable of extruding each of the compositions independently using a three co-extrusion line;
(c) optionally, adding slip and anti-block additives to the composition suitable for forming the skin layers of the inventive multilayer film;
(d) extruding the above compositions using the three co-extrusion line and forming a homogenous extrudate;
(e) processing the extrudate using conventional screws and subsequently forming a melted polymer composition using a feed block; and
(f) conveying the melted polymer composition to a die head section using different types of annular dies and forming a film precursor; and
(g) cooling the film precursor to form the inventive multilayer film.

In some embodiments of the invention, the inventive film formed has low coefficient of friction (COF) which ensures improved packaging and provides the advantage of higher speed roll winding, resulting in improved process efficiency during processing of rubber. In some aspects of the invention, the coefficient of friction (COF) static value ranges from 0.25 to 0.45, when measured in accordance with ASTM D1894.

In various aspects of the invention, the invention is directed towards an article comprising the multilayer film of the present invention, wherein the article is a packaging material for rubber bale. In one aspect of the invention, the invention is directed towards a bale comprising a rubber material, preferably ethylene propylene diene monomer rubber (EPDM), and packed using the multilayer film of the present invention. Other rubber material which may be wrapped by the multilayer film of the present invention include rubber material such as nitrile rubber, butyl rubber, butadiene rubber, chlorosulfonated polyethylene rubber and the likes thereof.

Specific examples demonstrating some of the embodiments of the invention are included below. The examples are for illustrative purposes only and are not intended to limit the invention. It should be understood that the embodiments and the aspects disclosed herein are not mutually exclusive and such aspects and embodiments can be combined in any way. Those of ordinary skill in the art will readily recognize parameters that can be changed or modified to yield essentially the same results.

### EXAMPLE 1

**Purpose:** To evaluate a polyethylene based multilayer film prepared in accordance with an embodiment of the invention and compare the properties with a film derived from ethylene vinyl acetate film (Reference 1 film).

**Material used for the multilayer film:** For the purpose of Example 1 a multilayer film having the following structure was prepared:

**Table 1: Film structure and content**

| Film Layer | Ethylene polymer content as wt. % of each layer | First Ethylene Copolymer as % of each layer | Second Ethylene Copolymer as % of each layer | Slipping agent Master Batch | Anti-block agent Master Batch | Thickness in microns for the multilayer film of Example 1 (140 micron) |
|---|---|---|---|---|---|---|
| First Skin Layer | 15% | 79% | 0 | 2% | 4% | 15.4 |
| Core Layer | 0 | 0 | 100% | 0 | 0 | 109.2 |
| Second Skin Layer | 15% | 79% | 0 | 2% | 4% | 15.4 |

**Table 2: Polymeric content and grades used**

| Polymer Component | Content as wt.% of multilayer film of Example 1 | Polymer Grade used (Supplier) |
|---|---|---|
| Ethylene polymer | 3.3% | Either of the grades HP0823J/HP0322/HP0323 (SABIC) |
| First Ethylene Copolymer | 17.38% | COHERE 8102L (SABIC) |
| Second Ethylene Copolymer | 78% | COHERE 8170D (SABIC) |
| Slipping agent Master Batch | 0.44% | PA 83 (Clariant) |
| Anti-block agent Master Batch | 0.88% | PA 80 (Clariant) |

A Reference 1 multilayer film based on EVA polymer was prepared having the composition as shown below. The Reference 1 film was used to compare the properties of inventive film prepared in accordance with Example 1.

**Table 3: Reference 1 film structure and composition**

| | Thickness (140 micron) | EVA content as % of film | Plastomer (Ethylene copolymer with monomer content > 30-45 wt. %) | Slip Agent and Anti-block agents |
|---|---|---|---|---|
| First skin Layer | 28 | 94% | 0 | 6% |
| Core Layer | 84 | 0 | 97.5% | 2.5% |
| Second Skin Layer | 28 | 94% | 0 | 6% |

**Process of making the multilayer film of Example 1 and Reference 1 film:** The multilayer film for the purpose of Example 1 and the Reference 1 film, was prepared by following the general steps:
(a) independently blending three different polymer compositions, each suitable for forming the first skin layer, the core layer and the second skin layer respectively, of the film of Example 1, in a V-blender under temperature conditions not exceeding 40⁰C and for a time period of about 3 to 5 minutes;
(b) subsequently, the resulting compositions were introduced independently in a feeder of an extruder that was capable of extruding each of the compositions independently using a three co-extrusion line (Extruder A,B,C);
(c) slip and anti-block additives were added to the composition that was suitable for forming the skin layers in the Extruder A and Extruder C;
(d) the above compositions so obtained was extruded using the three co-extrusion line and a homogenous extrudate was formed;
(e) the extrudate so obtained, was processed using conventional screws and subsequently a melted polymer composition was formed by using a feed block;
(f) the melted polymer composition was conveyed to a die head section using different types of annular dies and a film precursor was formed; and
(g) the film precursor was thereafter cooled to form the inventive multilayer film of Example 1.

Specifically, the extruding conditions that was used is summarized as follows:

**Table 4: Extruder Processing Conditions**

| | Screw Speed (rpm) | Melt Pressure (bar) | Melt Temperature (°C) |
|---|---|---|---|
| Extruder A (First Skin Layer) | 7 | 104 | 200 |
| Extruder B (Core Layer) | 43 | 140 | 215 |
| Extruder C (Second Skin Layer) | 7 | 176 | 201 |

**Table 5: Extruder Temperature (°C)**

| | Extruder A (°C) | Extruder B (°C) | Extruder C (°C) |
|---|---|---|---|
| Temperature Zone 1 | 40-190 | 40-200 | 40-190 |
| Temperature Zone 2 | 195-200 | 210 | 195-200 |
| Temperature Zone 3 | 210 | 210 | 210 |

**Table 6: Extrusion specification and processing**

| Die diameter | Die Gap | Output | Air ring |
|---|---|---|---|
| 200 mm | 2.5 | 41 kg/h | 34 % |

**Results:** Table 7 below provides a detail comparison between the properties of the inventive multilayer film prepared in accordance with Example 1 and that of Reference 1:

**Table 7: Comparison of film of Example 1 with Reference 1 film**

| | Standard used for measurement | Inventive multilayer film prepared in accordance with Example 1 | Reference 1 film based on EVA (Comparative) |
|---|---|---|---|
| Coefficient of Friction (COF) Static | ASTM D1894 | 0.39 | 0.6 |
| Coefficient of Friction (COF) Dynamic | ASTM D1894 | 0.32 | 0.51 |
| Haze | ASTM D1003 | 4.74% | 25.98% |
| Clarity | ASTM D4635 | 98.98% | 59.3% |
| Tm (Melt temperature) | Using DSC with 10⁰C/min heating rate | 85 | 93.9 |
| Crystalline Volume Fraction (Xc) | Using DSC with 10⁰C/min heating rate | 8.2% | 28% |
| Delta Heat of Fusion | Using DSC with 10⁰C/min heating rate | 24 J/g | 82 J/g |
| Puncture Resistance | Based on ASTM D5748D | No break | No break |
| Dart Drop Impact | ASTM D1709 (860 gram no breakage) | No Break | No Break |
| Tensile Strength @ Yield Machine Direction | ASTM D882 | 5.13 MPa | 6.62 MPa |
| Tensile Strength @ Break Machine Direction | ASTM D882 | 28.4 MPa | 28 MPa |
| Tensile Elongation @ Yield Machine Direction | ASTM D882 | 32% | 37% |
| Tensile Elongation @ Break Machine Direction | ASTM D882 | 780% | 758% |
| Tensile Strength @ Yield Transverse Direction | ASTM D882 | 4.9 MPa | 5.73 MPa |
| Tensile Strength @ Break Transverse Direction | ASTM D882 | 23.8 MPa | 25.42 MPa |
| Tensile Elongation @ Yield Transverse Direction | ASTM D882 | 33% | 27.3% |
| Tensile Elongation @ Break Transverse Direction | ASTM D882 | 992% | 1040% |

From the results illustrated in Table 7 it is evident that the inventive multilayer film prepared in accordance with Example 1, has certain advantage over that of EVA based films of Reference 1. From the results of Table 7, the inventive multilayer films demonstrate lower crystalline volume fraction (Xc) and lower Delta Heat of Fusion compared to that of EVA based film of Reference 1, indicating higher amorphous content of the inventive film. For example, the Xc value of the inventive film is nearly 71% lower than that of the EVA based film of Reference 1. This ensures greater compatibility and ease of processability of the inventive multilayer film over that of Reference 1 film for the purpose of wrapping rubber bales. From the values of haze and clarity, the inventive multilayer film of Example 1 has improved optical property over that of the EVA based film of Reference 1, ensuring improved suitability for wrapping/packaging of rubber bales. For example, the haze property of the multilayer film is nearly 82% lower than that of the EVA based film of Reference 1.

Further, comparing the melting temperature (Tₘ) of Example 1 multilayer film with that of the EVA based film, the melting temperature is nearly 10% lower than that of the EVA based film of Reference 1, indicating improved processability for rubber bales during compounding without the need of peeling of the wrapping films. The mechanical property of the inventive multilayer film of Example 1 is comparable to that of the film of Reference 1, demonstrating similar tensile, dart property and puncture resistance property. Thus, it may be concluded that the inventive film of Example 1 when compared to the EVA based film of Reference 1, demonstrates improved compatibility with rubber, improved melt processability and improved optical property, while retaining suitable mechanical property/integrity.

### COMPARATIVE EXAMPLES (POLYETHYLENE MULTILAYER FILMS)

**Purpose:** To evaluate the characteristics of polyethylene based multilayer film which is free of EVA polymer and having a film structure and composition containing polyolefin elastomers in the skin layers and ethylene polymers (LDPE) in the core layer.

Three polyethylene film recipes (A, B and C) were prepared using a process as discussed under Example 1. A key difference between the inventive film from Example 1 and that prepared from recipe A, B and C, was that the films of recipes A, B and C has high content of polyethylene elastomers in the skin layer.

**Table 8: Multilayer polyethylene based films as comparative to the present invention**

| | Ethylene polymer as % content of each layer | First ethylene copolymer (POP) as % content of each layer | Second Ethylene copolymer (POE) as % content of each layer | Anti-block Additives | Slip Additives |
|---|---|---|---|---|---|
| **Comparative Multilayer Film Recipe A** | | | | | |
| First Skin Layer | 0 | 0 | 95 wt.% | 4 wt.% | 1 wt.% |
| Core Layer | 15 wt. % | 40 wt.% | 44 wt.% | 0 | 1 wt.% |
| Second Skin Layer | 0 | 0 | 95 wt.% | 4 wt. % | 1 wt.% |

| **Comparative Multilayer Film Recipe B** | | | | | |
|---|---|---|---|---|---|
| First Skin Layer | 0 | 0 | 95 wt.% | 4 wt.% | 1 wt.% |
| Core Layer | 15 wt. % | 24 wt.% | 60 wt.% | 0 | 1 wt.% |
| Second Skin Layer | 0 | 0 | 95 wt.% | 4 wt.% | 1 wt.% |

| **Comparative Multilayer Film Recipe C** | | | | | |
|---|---|---|---|---|---|
| First Skin Layer | 0 | 0 | 95 wt.% | 4 wt.% | 1 wt.% |
| Core Layer | 10 wt. % | 29 wt.% | 60 wt.% | 0 | 1 wt.% |
| Second Skin Layer | 0 | 0 | 95 wt.% | 4 wt.% | 1 wt.% |

The films prepared from recipe A, B and C demonstrated poor bubble stability, high stickiness (adherence), undesirable levels of film thickness variation and poor processability characteristics. Without wishing to be bound by any specific theory, it believed that the presence of polyolefin elastomers in the skin layer resulted in films having poor stability and processability and was not found suitable for rubber bale packaging/wrapping application. As evidenced from the examples provided in this disclosure, the present invention now enables skilled artisans to prepare multilayer films which are specifically suited for rubber bale wrapping/packaging and the solution provided by means of this invention allows a skilled artisan to overcome one or more of the limitations described in the 'Background' section of this disclosure.

## Claims

1. A multilayer film, comprising:
a. a first skin layer and a second skin layer, wherein each of the first skin layer and the second skin layer independently comprises:
i) an ethylene polymer having a density ranging from 918 kg/m³ to 930 kg/m³, preferably ranging from 920 kg/m³ to 925 kg/m³, when determined in accordance with ASTM D1505 at 23°C, wherein the ethylene polymer is present in an amount ranging from 2 wt.% to 30 wt.%, preferably 5 wt.% to 20 wt.%, with regard to the total weight of each of the first skin layer and the second skin layer; and
ii) a first ethylene alpha-olefin copolymer having a density ranging from 880 kg/m³ to 905 kg/m³, preferably ranging from 890 kg/m³ to 903 kg/m³, when determined in accordance with ASTM D792 at 23°C and present in an amount ranging from 70 wt.% to 98 wt.%, preferably ranging from 75 wt.% to 90 wt.%, with regard to the total weight of each of the first skin layer and the second skin layer, and wherein the first ethylene alpha-olefin copolymer comprises 2 wt.% to 25 wt.%, preferably 10 wt.% to 20 wt.%, of moieties derived from alpha olefins, with regard to the total weight of the first ethylene alpha-olefin copolymer; and
b. at least one core layer positioned between the first skin layer and the second skin layer comprising a second ethylene alpha-olefin copolymer present in an amount ranging from 95 wt.% to 100 wt.%, preferably 100 wt.%, with regard to the total weight of the core layer, and wherein the second ethylene alpha-olefin copolymer has a density ranging from 830 kg/m³ to 875 kg/m³, when determined in accordance with ASTM D792 at 23°C, wherein the second ethylene alpha-olefin copolymer comprises 30 wt.% to 45 wt.%, preferably 32 wt.% to 40 wt.%, of moieties derived from alpha-olefins, with regard to the total weight of the second ethylene alpha-olefin copolymer.

2. The multilayer film according to claim 1, wherein the core layer is present in an amount ranging from 70 wt.% to 85 wt.%, preferably ranging from 75 wt.% to 82 wt.%, with regard to the total weight of the multilayer film.

3. The multilayer film according to any one of claims 1-2, wherein each of the first skin layer and/or the second skin layer further comprises one or more additives present in amount ranging from 2 wt.% to 8 wt.%, preferably ranging from 4 wt.% to 7 wt. %, with regard to the total weight of each of the first skin layer and the second skin layer.

4. The multilayer film according to any one of claims 1-3, wherein the alpha-olefin is a compound having 4-10 carbon atoms, preferably selected from 1-butene, 4-methyl-1-pentene, 1-hexene, and 1-octene, with preference to1-octene.

5. The multilayer film according to any one of claims 1-4, wherein the ethylene polymer has a melt flow rate ranging from 0.1 g/10 min to 0.9 g/10 min, preferably ranging from 0.2 g/10 min to 0.8 g/10 min, when determined at 190°C at 2.16 kg load in accordance with ASTM D1238.

6. The multilayer film according to any one of claims 1-5, wherein the first ethylene alpha-olefin copolymer has a melting temperature ranging from 75°C to 105°C, preferably ranging from 88°C to 99°C, when determined in accordance with a method based on ASTM D3418-15, using Differential Scanning Calorimetry with a first heating and cooling cycle at a temperature ranging from 23°C to 200°C at a heating and a cooling rate of 10°C/min for a 10 mg film sample and using a nitrogen purge gas at flow rate of 50 + 5 mL/min, followed by a second heating cycle identical to the first heating cycle; and/or the first ethylene alpha-olefin copolymer has a melt flow rate ranging from 0.1 g/10 min to 5 g/10 min, preferably ranging from 0.5 g/10 min to 3 g/10 min, more preferably ranging from 0.8 g/10 min to 2 g/10 min, when determined at 190°C at 2.16 kg load in accordance with ASTM D1238.

7. The multilayer film according to any one of claims 1-6, wherein the second ethylene alpha-olefin copolymer has a melting temperature ranging from 60°C to 67°C, preferably ranging from 62°C to 65°C, when determined in accordance with a method based on ASTM D3418-15, using Differential Scanning Calorimetry with a first heating and cooling cycle at a temperature ranging from 23°C to 200°C, at a heating and a cooling rate of 10°C/min for a 10 mg film sample and using a nitrogen purge gas at flow rate of 50 + 5 mL/min, followed by a second heating cycle identical to the first heating cycle; and/or having a melt flow rate ranging from 0.5 g/10 min to 3 g/10 min, preferably ranging from 0.8 g/10 min to 2 g/10 min, when determined at 190°C at 2.16 kg load in accordance with ASTM D1238.

8. The multilayer film according to any one of claims 1-7, wherein the multilayer film has a melting temperature ranging from 70°C to 90⁰C, preferably ranging from 72°C to 80⁰C, using Differential Scanning Calorimetry with a first heating and cooling cycle at a temperature ranging from 23°C to 200⁰C, at a heating and a cooling rate of 10⁰C/min for a 10 mg film sample and using a nitrogen purge gas at flow rate of 50 + 5 mL/min, followed by a second heating cycle identical to the first heating cycle.

9. The multilayer film according to any one of claims 1-8, wherein the multilayer film has a thickness ranging from 70 micron to 200 micron, preferably ranging from 120 micron to 175 micron.

10. The multilayer film according to any one of claims 1-9, wherein the multilayer film comprises:
(a) the ethylene polymer, present in an amount ranging from 2 wt.% to 6 wt.%, with regard to the total weight of the multilayer film;
(b) the first ethylene alpha-olefin copolymer, present in an amount ranging from 10 wt.% to 20 wt.%, with regard to the total weight of the multilayer film;
(c) the second ethylene alpha-olefin copolymer, present in an amount ranging from 70 wt.% to 85 wt.%, with regard to the total weight of the multilayer film; and
(d) optionally, additives present in an amount ranging from 0.10 wt.% to 1.50 wt.%, with regard to the total weight of the multilayer film.

11. Article comprising the multilayer film according to any one of claims 1-10, wherein the article is a packaging material for rubber bale.

12. A bale comprising a rubber material, preferably ethylene propylene diene monomer rubber (EPDM), and packed using the multilayer film of claims 1-10.

13. Use of the multilayer film to improve the melt processability of rubber bales packed using the multilayer film of claims 1-10.

## Patentansprüche

1. Mehrschichtfolie, umfassend:
a. eine erste Hautschicht und eine zweite Hautschicht, wobei jede der ersten Hautschicht und der zweiten Hautschicht unabhängig Folgendes umfasst:
i) ein Ethylenpolymer mit einer Dichte im Bereich von 918 kg/m³ bis 930 kg/m³, bevorzugt im Bereich von 920 kg/m³ bis 925 kg/m³, wenn bestimmt gemäß ASTM D1505 bei 23 °C, wobei das Ethylenpolymer in einer Menge im Bereich von 2 Gew.-% bis 30 Gew.-%, bevorzugt 5 Gew.-% bis 20 Gew.-% in Bezug auf das Gesamtgewicht von jeder der ersten Hautschicht und der zweiten Hautschicht vorhanden ist; und
ii) ein erstes Ethylen-alpha-Olefin-Copolymer mit einer Dichte im Bereich von 880 kg/m³ bis 905 kg/m³, bevorzugt im Bereich von 890 kg/m³ bis 903 kg/m³, wenn bestimmt gemäß ASTM D792 bei 23 °C und vorhanden in einer Menge im Bereich von 70 Gew.-% bis 98 Gew.-%, bevorzugt im Bereich von 75 Gew.-% bis 90 Gew.-% in Bezug auf das Gesamtgewicht von jeder der ersten Hautschicht und der zweiten Hautschicht, und wobei das erste Ethylen-alpha-Olefin-Copolymer 2 Gew.-% bis 25 Gew.-%, bevorzugt 10 Gew.-% bis 20 Gew.-%, Einheiten, abgeleitet von Alpha-Olefinen, in Bezug auf das Gesamtgewicht des ersten Ethylen-alpha-Olefin-Copolymers, umfasst; und
b. mindestens eine Kernschicht, die zwischen der ersten Hautschicht und der zweiten Hautschicht positioniert ist, umfassend ein zweites Ethylen-alpha-Olefin-Copolymer, das vorhanden ist in einer Menge im Bereich von 95 Gew.-% bis 100 Gew.-%, bevorzugt 100 Gew.-%, in Bezug auf das Gesamtgewicht der Kernschicht, und wobei das zweite Ethylen-alpha-Olefin-Copolymer eine Dichte im Bereich von 830 kg/m³ bis 875 kg/m³ aufweist, wenn bestimmt gemäß ASTM D792 bei 23 °C, wobei das zweite Ethylen-alpha-Olefin-Copolymer 30 Gew.-% bis 45 Gew.-%, bevorzugt 32 Gew.-% bis 40 Gew.-% Einheiten, abgeleitet von Alpha-Olefinen, in Bezug auf das Gesamtgewicht des zweiten Ethylen-alpha-Olefin-Copolymers, umfasst.

2. Mehrschichtfolie nach Anspruch 1, wobei die Kernschicht in einer Menge im Bereich von 70 Gew.-% bis 85 Gew.-%, bevorzugt im Bereich von 75 Gew.-% bis 82 Gew.-%, in Bezug auf das Gesamtgewicht der Mehrschichtfolie, vorhanden ist.

3. Mehrschichtfolie nach einem der Ansprüche 1-2, wobei jede der ersten Hautschicht und/oder der zweiten Hautschicht ferner einen oder mehrere Zusatzstoffe umfasst, die in einer Menge im Bereich von 2 Gew.-% bis 8 Gew.-%, bevorzugt im Bereich von 4 Gew.-% bis 7 Gew.-%, in Bezug auf das Gesamtgewicht von jeder der ersten Hautschicht und der zweiten Hautschicht, vorhanden sind.

4. Mehrschichtfolie nach einem der Ansprüche 1-3, wobei das Alpha-Olefin eine Verbindung mit 4-10 Kohlenstoffatomen ist, bevorzugt ausgewählt aus 1-Buten, 4-Methyl-1-penten, 1-Hexen und 1-Octen, mit Präferenz für 1-Octen.

5. Mehrschichtfolie nach einem der Ansprüche 1-4, wobei das Ethylenpolymer eine Schmelzflussrate im Bereich von 0,1 g/10 min bis 0,9 g/10 min, bevorzugt im Bereich von 0,2 g/10 min bis 0,8 g/10 min aufweist, wenn bestimmt bei 190 °C bei 2,16 kg Last gemäß ASTM D1238.

6. Mehrschichtfolie nach einem der Ansprüche 1-5, wobei das erste Ethylen-alpha-Olefin-Copolymer eine Schmelztemperatur im Bereich von 75 °C bis 105 °C, bevorzugt im Bereich von 88 °C bis 99 °C aufweist, wenn bestimmt gemäß einem Verfahren basierend auf ASTM D3418-15 unter Verwendung von dynamischer Differenzkalorimetrie mit einem ersten Aufwärm- und Abkühlzyklus bei einer Temperatur im Bereich von 23 °C bis 200 °C bei einer Aufwärm- und Abkühlgeschwindigkeit von 10 °C/min für eine 10-mg-Folienprobe und unter Verwendung eines Stickstoff-Spülgases bei einer Strömungsrate von 50 + 5 ml/min, gefolgt von einem zweiten Aufwärmzyklus, der identisch zum ersten Aufwärmzyklus ist; und/oder das erste Ethylen-alpha-Olefin-Copolymer eine Schmelzflussrate im Bereich von 0,1 g/10 min bis 5 g/10 min, bevorzugt im Bereich von 0,5 g/10 min bis 3 g/10 min, noch bevorzugter im Bereich von 0,8 g/10 min bis 2 g/10 min aufweist, wenn bestimmt bei 190 °C bei 2,16 kg Last gemäß ASTM D1238.

7. Mehrschichtfolie nach einem der Ansprüche 1-6, wobei das zweite Ethylen-alpha-Olefin-Copolymer eine Schmelztemperatur im Bereich von 60 °C bis 67 °C, bevorzugt im Bereich von 62 °C bis 65 °C aufweist, wenn bestimmt gemäß einem Verfahren basierend auf ASTM D3418- 15 unter Verwendung von dynamischer Differenzkalorimetrie mit einem ersten Aufwärm- und Abkühlzyklus bei einer Temperatur im Bereich von 23 °C bis 200 °C bei einer Aufwärm- und Abkühlgeschwindigkeit von 10 °C/min für eine 10-mg-Folienprobe und unter Verwendung eines Stickstoff-Spülgases bei einer Strömungsrate von 50 + 5 ml/min, gefolgt von einem zweiten Aufwärmzyklus, der identisch zum ersten Aufwärmzyklus ist; und/oder mit einer Schmelzflussrate im Bereich von 0,5 g/10 min bis 3 g/10 min, bevorzugt im Bereich von 0,8 g/10 min bis 2 g/10 min, wenn bestimmt bei 190 °C bei 2,16 kg Last gemäß ASTM D1238.

8. Mehrschichtfolie nach einem der Ansprüche 1-7, wobei die Mehrschichtfolie eine Schmelztemperatur im Bereich von 70 °C bis 90 °C, bevorzugt im Bereich von 72 °C bis 80 °C aufweist, unter Verwendung von dynamischer Differenzkalorimetrie mit einem ersten Aufwärm- und Abkühlzyklus bei einer Temperatur im Bereich von 23 °C bis 200 °C bei einer Aufwärm- und Abkühlgeschwindigkeit von 10 °C/min für eine 10-mg-Folienprobe und unter Verwendung eines Stickstoff-Spülgases bei einer Strömungsrate von 50 + 5 ml/min, gefolgt von einem zweiten Aufwärmzyklus, der identisch zum ersten Aufwärmzyklus ist.

9. Mehrschichtfolie nach einem der Ansprüche 1-8, wobei die Mehrschichtfolie eine Dicke im Bereich von 70 Mikron bis 200 Mikron, bevorzugt im Bereich von 120 Mikron bis 175 Mikron aufweist.

10. Mehrschichtfolie nach einem der Ansprüche 1-9, wobei die Mehrschichtfolie Folgendes umfasst:
(a) das Ethylenpolymer, vorhanden in einer Menge im Bereich von 2 Gew.-% bis 6 Gew.-% in Bezug auf das Gesamtgewicht der Mehrschichtfolie;
(b) das erste Ethylen-alpha-Olefin-Copolymer, vorhanden in einer Menge im Bereich von 10 Gew.-% bis 20 Gew.-% in Bezug auf das Gesamtgewicht der Mehrschichtfolie;
(c) das zweite Ethylen-alpha-Olefin-Copolymer, vorhanden in einer Menge im Bereich von 70 Gew.-% bis 85 Gew.-% in Bezug auf das Gesamtgewicht der Mehrschichtfolie; und
(d) optional Zusatzstoffe, vorhanden in einer Menge im Bereich von 0,10 Gew.-% bis 1,50 Gew.-% in Bezug auf das Gesamtgewicht der Mehrschichtfolie.

11. Artikel, umfassend die Mehrschichtfolie nach einem der Ansprüche 1-10, wobei der Artikel ein Verpackungsmaterial für einen Kautschukballen ist.

12. Ballen, umfassend ein Kautschukmaterial, bevorzugt Ethylen-Propylen-Dien-Monomer-Kautschuk (EPDM), und verpackt unter Verwendung der Mehrschichtfolie nach Ansprüchen 1-10.

13. Verwendung der Mehrschichtfolie, um die Schmelzverarbeitbarkeit von Kautschukballen, die unter Verwendung der Mehrschichtfolie nach Ansprüchen 1-10 verpackt sind, zu verbessern.

## Revendications

1. Film multicouche, comprenant :
a. une première couche de peau et une deuxième couche de peau, dans lequel chacune de la première couche de peau et de la deuxième couche de peau comprend indépendamment :
i) un polymère d'éthylène ayant une masse volumique allant de 918 kg/m³ à 930 kg/m³, de préférence allant de 920 kg/m³ à 925 kg/m³, lorsqu'elle est déterminée selon la norme ASTM D1505 à 23 °C, dans lequel le polymère d'éthylène est présent en une quantité allant de 2 % en poids à 30 % en poids, de préférence de 5 % en poids à 20 % en poids, par rapport au poids total de chacune de la première couche de peau et de la deuxième couche de peau ; et
ii) un premier copolymère d'éthylène- alpha-oléfine ayant une masse volumique allant de 880 kg/m³ à 905 kg/m³, de préférence allant de 890 kg/m³ à 903 kg/m³, lorsqu'elle est déterminée selon la norme ASTM D792 à 23 °C et présent en une quantité allant de 70 % en poids à 98 % en poids, de préférence allant de 75 % en poids à 90 % en poids, par rapport au poids total de chacune de la première couche de peau et de la deuxième couche de peau, et dans lequel le premier copolymère d'éthylène-alpha-oléfine comprend de 2 % en poids à 25 % en poids, de préférence 10 % en poids à 20 % en poids, de fractions dérivées d'alpha-oléfines, par rapport au poids total du premier copolymère d'éthylène-alpha-oléfine ; et
b. au moins une couche centrale positionnée entre la première couche de peau et la deuxième couche de peau comprenant un deuxième copolymère d'éthylène-alpha-oléfine présent en une quantité allant de 95 % en poids à 100 % en poids, de préférence 100 % en poids, par rapport au poids de la couche centrale, et dans laquelle le deuxième copolymère d'éthylène-alpha-oléfine a une masse volumique allant de 830 kg/m³ à 875 kg/m³, lorsqu'elle est déterminée selon la norme ASTM D792 à 23 °C, dans lequel le deuxième copolymère d'éthylène-alpha-oléfine comprend de 30 % en poids à 45 % en poids, de préférence de 32 % en poids à 40 % en poids, de fractions dérivées d'alpha-oléfines, par rapport au poids total du deuxième copolymère d'éthylène-alpha-oléfine.

2. Film multicouche selon la revendication 1, dans lequel la couche centrale est présente en une quantité allant de 70 % en poids à 85 % en poids, de préférence allant de 75 % en poids à 82 % en poids, par rapport au poids total du film multicouche.

3. Film multicouche selon l'une quelconque des revendications 1 et 2, dans lequel chacune de la première couche de peau et/ou de la deuxième couche de peau comprend en outre un ou plusieurs additifs présents en une quantité allant de 2 % en poids à 8 % en poids, de préférence allant de 4 % en poids à 7 % en poids, par rapport au poids total de chacune de la première couche de peau et de la deuxième couche de peau.

4. Film multicouche selon l'une quelconque des revendications 1 à 3, dans lequel l'alpha-oléfine est un composé ayant de 4 à 10 atomes de carbone, de préférence sélectionné parmi le 1-butène, le 4-méthyl-1-pentène, le 1-hexène, et le 1-octène, avec une préférence pour le 1-octène.

5. Film multicouche selon l'une quelconque des revendications 1 à 4, dans lequel le polymère d'éthylène a un indice de fluidité à chaud allant de 0,1 g/10 min à 0,9 g/10 min, de préférence allant de 0,2 g/10 min à 0,8 g/10 min, lorsqu'il est déterminé à 190 °C à une charge de 2,16 kg selon la norme ASTM D1238.

6. Film multicouche selon l'une quelconque des revendications 1 à 5, dans lequel le premier copolymère d'éthylène-alpha-oléfine a une température de fusion allant de 75 °C à 105 °C, de préférence allant de 88 °C à 99 °C, lorsqu'elle est déterminée selon une méthode basée sur la norme ASTM D3418-15, à l'aide d'une calorimétrie différentielle à balayage avec un premier cycle de chauffage et de refroidissement à une température allant de 23 °C à 200 °C à une vitesse de chauffage et de refroidissement de 10 °C/min pour un échantillon de film de 10 mg et à l'aide d'un gaz de purge d'azote à un débit de 50 + 5 mL/min, suivi d'un deuxième cycle de chauffage identique au premier cycle de chauffage ; et/ou le premier copolymère d'éthylène-alpha-oléfine a un indice de fluidité à chaud allant de 0,1 g/10 min à 5 g/10 min, de préférence allant de 0,5 g/10 min à 3 g/10 min, plus préférablement allant de 0,8 g/10 min à 2 g/10 min, lorsqu'il est déterminé à 190 °C à une charge de 2,16 kg selon la norme ASTM D1238.

7. Film multicouche selon l'une quelconque des revendications 1 à 6, dans lequel le deuxième copolymère d'éthylène-alpha-oléfine a une température de fusion allant de 60 °C à 67 °C, de préférence allant de 62 °C à 65 °C, lorsqu'elle est déterminée selon une méthode basée sur la norme ASTM D3418-15, à l'aide d'une calorimétrie différentielle à balayage avec un premier cycle de chauffage et de refroidissement à une température allant de 23 °C à 200 °C à une vitesse de chauffage et de refroidissement de 10 °C/min pour un échantillon de film de 10 mg et à l'aide d'un gaz de purge d'azote à un débit de 50 + 5 mL/min, suivi d'un deuxième cycle de chauffage identique au premier cycle de chauffage ; et/ou ayant un indice de fluidité à chaud allant de 0,5 g/10 min à 3 g/10 min, de préférence allant de 0,8 g/10 min à 2 g/10 min, lorsqu'il est déterminé à 190 °C à une charge de 2,16 kg selon la norme ASTM D1238.

8. Film multicouche selon l'une quelconque des revendications 1 à 7, dans lequel le film multicouche a une température de fusion allant de 70 °C à 90 °C, de préférence allant de 72 °C à 80 °C, à l'aide d'une calorimétrie différentielle à balayage avec un premier cycle de chauffage et de refroidissement à une température allant de 23 °C à 200 °C, à une vitesse de chauffage et de refroidissement de 10 °C/min pour un échantillon de film de 10 mg et à l'aide d'un gaz de purge d'azote à un débit de 50 + 5 mL/min, suivi d'un deuxième cycle de chauffage identique au premier cycle de chauffage.

9. Film multicouche selon l'une quelconque des revendications 1 à 8, dans lequel le film multicouche a une épaisseur allant de 70 microns à 200 microns, de préférence allant de 120 microns à 175 microns.

10. Film multicouche selon l'une quelconque des revendications 1 à 9, dans lequel le film multicouche comprend :
(a) le polymère d'éthylène, présent en une quantité allant de 2 % en poids à 6 % en poids, par rapport au poids total du film multicouche ;
(b) le premier copolymère d'éthylène-alpha-oléfine, présent en une quantité allant de 10 % en poids à 20 % en poids, par rapport au poids total du film multicouche ;
(c) le deuxième copolymère d'éthylène-alpha-oléfine, présent en une quantité allant de 70 % en poids à 85 % en poids, par rapport au poids total du film multicouche ; et
(d) éventuellement, des additifs présents en une quantité allant de 0,10 % en poids à 1,50 % en poids, par rapport au poids total du film multicouche.

11. Article comprenant le film multicouche selon l'une quelconque des revendications 1 à 10, dans lequel l'article est un matériau d'emballage pour balle de caoutchouc.

12. Balle comprenant un matériau en caoutchouc, de préférence du caoutchouc de monomères d'éthylène-propylène-diène (EPDM), et emballée à l'aide du film multicouche des revendications 1 à 10.

13. Utilisation du film multicouche pour améliorer l'aptitude au traitement à l'état fondu de balles de caoutchouc emballées à l'aide du film multicouche des revendications 1 à 10.
